# EUROPEAN PATENT SPECIFICATION

(11) **EP 3 729 336 B1**
(45) Date of publication and mention of the grant of the patent: **06.10.2021**
(21) Application number: 18836655.3
(22) Date of filing: 18.12.2018
(51) Int. Cl.: G06K 19/077, G06K 19/02

(54) **METHOD FOR MANUFACTURING A COLLAR PIECE COMPRISING AN RFID TAG**
VERFAHREN ZUR HERSTELLUNG EINES KRAGENSTÜCKES MIT EINEM RFID-ETIKETT
PROCÉDÉ DE FABRICATION D'UNE PIÈCE DE COLLIER COMPRENANT UNE ÉTIQUETTE RFID

(30) Priority: 21.12.2017 SE 1751620
(43) Date of publication of application: 28.10.2020
(73) Proprietor: Stora Enso Oyj, 00101 Helsinki (FI)
(72) Inventor: HUHTASALO, Lauri, 33200 Tampere (FI); SIITONEN, Simo, 566 10 Rautjärvi (FI)
(74) Representative: Forsberg, Anna Karin
(86) International application number: PCT/IB2018/060223
(87) International publication number: WO 2019/123228

(56) References cited:
- WO-A1-2008/132287
- WO-A1-2016/189446
- US-A1- 2005 001 785
- US-A1- 2007 146 142
- US-A1- 2010 127 084

## Description

### Technical field

The present invention relates to method for manufacturing a collar piece comprising an RFID tag, which collar piece is intended to be arranged as an inner frame in a cigarette pack.

The invention also relates to a collar piece comprising an RFID tag, which collar piece is intended to be arranged as an inner frame in a cigarette pack.

In the following the expression RFID (Radio Frequency Identification) tag will be frequently used. An RFID tag is a tag that is intended to be attached onto objects to be identified in a radio-frequency identification system. An RFID tag comprising an RFID antenna and an RFID IC (integrated circuit), which IC is electrically connected onto the antenna.

A collar piece is an inner frame that is surrounding the cigarettes in a cigarette pack. The collar piece gives structural stability to the cigarette pack.

### Background ― Problem

It is known that an RFID tag can be attached onto the collar piece of a cigarette pack.

US2004149602A1 discloses a cigarette pack comprising a collar piece (15) and a transponder (24) having an antenna system which is attached onto the collar piece.

See figure 5; paragraphs [0003], [0021], [0027] and [0035].

US2017027220A1 discloses an inner frame, a collar, where a control circuit can be attached onto the inner frame. Known collar pieces with RFID tags have some drawbacks, when it comes to the attaching the RFID tag onto the collar piece. Known methods is attaching the RFID tag directly onto the collar piece. One drawback with this is that is very time consuming to attach the RFID tag onto the collar piece. Moreover, it is not efficient to do this for a larger batches. Typically, the RFID tag is applied to items in a label format. A drawback of this format is that it requires several material layers, such as siliconized backing paper, "release liner", which is later thrown away, it requires an adhesive layer to attach the tag onto the collar piece, and it typically also contains a face material layer. All these add material costs and add thickness to the collar piece.

### Object of invention

An object with the invention is to present a method to manufacture a collar piece having an RFID tag and a collar piece comprising an RFID tag, which solves the problems mentioned above.

### Summary of the invention

The invention is defined by The method of claim 1.

### Detailed description of the invention

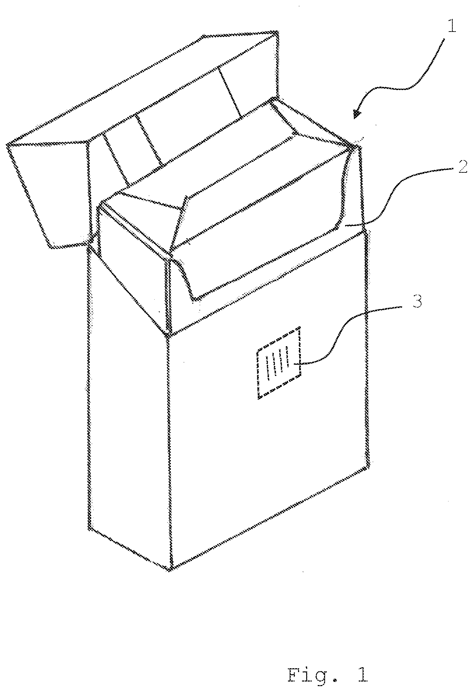

Figure 1 discloses a cigarette pack 1 comprising a collar piece 2, onto which an RFID tag 3 is attached.

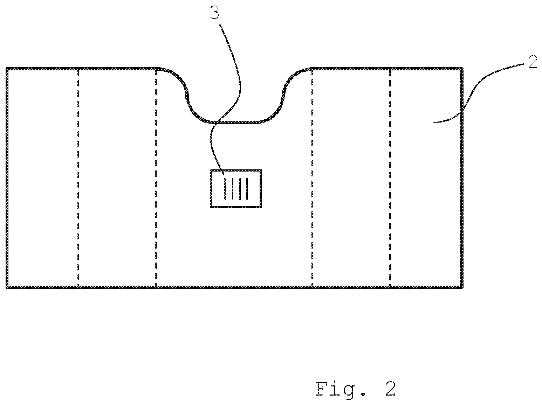

Figure 2 discloses a collar piece 2 comprising an RFID tag 3.

In the following the invention will be described more in detail, which invention discloses a method for manufacturing a collar piece 2 comprising an RFID tag 3, which collar piece is intended to be arranged as an inner frame in a cigarette pack 1, in a new inventive way. The method comprising the following four steps:

### 1. First step - providing a collar material web

The inventive method comprising a first step of providing a conventional collar piece material web, preferably a reel of a collar piece material web. The collar material web has a first surface and a second surface that faces away from the first surface. The collar piece material web is normally made of paperboard and delivered on a reel, wherein the collar material web is rolled-up onto the reel. A typical width of the collar material web, which is fed to the cigarette machine, is about 76mm and the length is about 100m. However, the skilled person realises that the invention is not limited to these specific dimensions (see last paragraph of the detailed description).

### 2. Second step - forming an RFID antenna

In accordance with the invention the method further comprising a step of forming an RFID antenna directly onto a surface of the collar web material. This RFID antenna forming may be performed in three different embodiments.

### 2.1. First embodiment of forming an RFID antenna:

In a first preferred embodiment, for forming of the antenna, electrically conductive solid particles are formed onto a surface of the web.

The conductive material is then cured to form a solidified, more compact antenna pattern. This can e.g. be made by application of heat with a suitable heater. Hereby, the conductive material is preferably heated to a temperature exceeding a characteristic melting temperature of the conductive material.

The heating is preferably a non-contacting of heating, which reduces the risk of smearing or unwanted macroscopic changes in the spatial distribution of conductive material on the surface of the web. However, heating methods that are contacting may also be used. Especially if heating is made with low or very low contact pressure, it may well have the same advantageous non-smearing characteristics. As a result of the heating, a melt is created.

Non-conducting heating may e.g. be obtained by infrared radiation, laser heating, or heating with other types of radiation, inductive heating, streaming with hot gas, etc. However, heating may also be made by bringing the web or the conductive material into contact with a heated body, such as a heated nip.

The heating of the conductive material to a temperature exceeding a characteristic melting temperature of the conductive material results in a melting and solidification of the conductive material. This may in itself be sufficient to form the electrically conductive pattern, i.e. the antenna, in particular if the heating also involves contacting the transferred particles with pressure.

However, the method may also comprise a step of applying a pressure onto the heated conductive material. This pressure may be applied by a nip, and preferably the surface temperature of the nip is lower than the characteristic melting temperature. This pressure is preferably applied relatively soon after the heating, so that the material still remains in melted in a method or almost melted state. Hereby, the previously melted material to solidify in the form of an essentially continuous, electrically conductive layer that covers an area on the collar material web corresponding to the intended electrically conductive pattern.

The nip may be a non-heated nip. However, preferably, the nip is heated in to a temperature only somewhat lower than the characteristic melting temperature, such as 30-60 degrees C lower. This ensures for example that the melt will not solidify prematurely, before it would become pressed against the substrate. The nip will cause the previously molten material of the originally solid electrically conductive particles to solidify again, but this time not in the form of separate particles but in the form of an essentially continuous, electrically conductive layer, arranged in the predetermined pattern.

However, in other embodiments, the nip temperature may be equal or almost equal to the characteristic melting temperature of the used electrically conductive material.

Further, as already discussed, the pressing step may in some embodiments be omitted.

The transfer of the conductive particles and the curing and solidification may in particular be made in the way disclosed in one or several of the WO 2013/113995, WO 2009/135985, WO 2008/006941 and WO 2016/189446. All of said documents hereby being incorporated in their entirety by reference.

The electrically conductive solid particles may be of any metal, and may e.g. be of pure metal. However, the particles are preferably formed of alloys, and most preferably non-eutectic alloys. In particular, it is preferred to use particles of metallic compounds that are - or resemble - so-called low temperature solders. The alloys preferably comprise tin and bismuth.

A non-limiting list of such metallic compounds includes (indicated percentages):
- tin / silver (3.43 percent) / copper (0.83 percent)
- tin / silver (2-2.5 percent) / copper (0.8 percent) / antimony (0.5-0.6 percent)
- tin / silver (3.5 percent) / bismuth (3.0 percent)
- tin / zink (10 percent)
- tin / bismuth (35-58 percent)
- tin / indium (52 percent)
- bismuth (53-76 percent) / tin (22-35 percent) / indium (2-12 percent)
- tin (35-95 percent) / bismuth (5-65 percent) / indium (0-12 percent).

At room pressure, the first four listed examples melt between 180 and 220 degrees C, while the four last-mentioned may melt at significantly lower temperatures, even below 100 degrees C.

Preferably, the particle-type conductive matter consists essentially of metal or metal alloy particles. The metal or metal alloy preferably has an atmospheric-pressure characteristic melting temperature of less than 300 degrees C, and more preferably less than 250 degrees C, and most preferably less than 200 degrees C, such as in the range 50-250 deg. C, or preferably within the range 100-200 degree C, which makes the method suitable, for example, for conventional paper, the physical properties of which may permanently change at too high temperatures. Suitable metals include, e.g. tin, bismuth, indium, zinc, nickel, or similar, used as single metals or in combinations. For example, tin-bismuth, tin-bismuth-zinc, tin-bismuth-indium or tin-bismuth-zinc-indium in different ratios may be used. In tin-containing alloys, the ratio of tin in the alloy is preferably 20 - 90 wt-percent, and most preferably 30 - 70, wt- percent of the total weight of the components in the alloy.

One possible embodiment for transferring the conductive material to the substrate web has been discussed in detail above. However, other ways of obtaining this conductive material transfer are also feasible. The material transfer may e.g. be obtained by:
- Transfer roll having electrodes, which are in different potential than the particle deposited on the surface of the transfer roll.
- Electrofotographic transfer, where the particles may be deposited in a solvent. The solvent is evaporated or absorbed by the substrate (in particular paper or board), whereafter the sintering is carried out for (almost) dry particles.
- Screen printing, where particles in liquid form (i.e. where particles are arranged in solvent or suspension) are transferred to the substrate through a web-like screen means (cloth or metal) or through a stencil.
- Gravure printing, flexographic printing, offset printing, ink-jet printing or the like of particles dissolved or suspended in carrier medium.

### 2.2. Second embodiment of forming an RFID antenna:

Further, other ways of forming the conductive material in a pattern can also be used. For example, the forming of the RFID antenna can be made by additive printing with a conductive ink. A conductive ink is an ink comprising conductive particles. The conductive ink can for example be silver ink, copper ink or graphene ink. The conductive inks inks are then made conductive by drying them or treating them with hot-air, radiation (UV, EB), photonic curing, laser or some other treatment method.

### 2.3. Example of forming an antenna not covered by the claims

The forming of the RFID antenna can also be made by first providing collar web material that is laminated with a conductive layer, preferably an aluminum foil. Parts of the conductive layer is then subtracted, such that the remaining conductive layer, on the collar material web, forms the RFID antenna. The subtraction of the conductive layer into the desired conductive pattern could for example be through cutting, grinding, brushing or the like.

### 3. Third step - attaching an RFID IC onto the antenna

Thereafter, the method comprising the step of attaching the RFID IC onto the antenna, such that, an electrical connection between the IC and the antenna is established, wherein the RFID tag 3 is formed. This method may be performed in some different embodiments:

### 3.1 First embodiment of attaching an RFID IC onto the antenna

In a first embodiment the RFID IC is attached onto the antenna by applying an adhesive between the IC and the antenna pad area and pressing the IC onto the RFID antenna.

The step of adding and connecting such circuits/chips to the labels can be provided as a further step in the same production line, or can be arranged as separate production line.

The adhesive may be applied to the web at a designated area by an adhesive applicator. The adhesive is preferably a non-conductive adhesive, such as a non-conductive paste (NCP), an isotropic conductive paste (ICP) or an anisotropic conductive paste (ACP). The adhesive/paste is preferably arranged for thermal compression bonding. The adhesive is preferably applied in liquid form, and cured/solidified when heated. The adhesive can, additionally or alternatively, be provided after placement of the IC, to provide additional strength to the joint.

In a second step, an IC/chip insertion station is provided, where ICs/chips are inserted onto the antenna with dedicated connection areas, i.e. connection pads, of the electrically conductive pattern. The insertion station may e.g. be a pick-and-place station, where ICs are picked from a storage, such as a stack, a container, a batch hopper, a wafer or the like and brought into the intended position on the labels. The picking tool may e.g. operate by vacuum. Heat is also preferably provided, in order to cure/solidify the adhesive, and also form adequate electric contact between the ICs and the electrically conductive patterns. Heat may e.g. be provided by heating of the picking tool, or by an external heater, e.g. arranged above or underneath the placement position. Additionally, or alternatively, the ICs may also be preheated during storage. Additionally, or alternatively, the conductive pattern may be heated prior to or during placement of the IC. Due to the heating, the IC will be soldered to contact areas of the conductive pattern. To ensure that electric contact is established between the ICs and the electrically conductive patterns, and also to facilitate placement of the ICs on the labels, the ICs may be provided with contact pads or bumps extending out from the IC body, and providing an enlarged and more easily connectable area.

The adhesive may also be cured, after placement of the IC. Curing can e.g. be obtained by heating, irradiation, etc. For example, a heated thermode for thermocompression curing of the adhesive can be used. Additionally, or alternatively, curing can be effected by e.g. heating in a heated oven, UV radiation, or the like.

### 3.2 Second embodiment of attaching an RFID IC onto the antenna

The first embodiment for forming the antenna, described in section 2.1. above, can have an alternative embodiment for attaching the IC onto the soldered antenna. This alternative embodiment will hereinafter be described.

The antenna, made of a soldering material, is covered with a hot melt adhesive (HMA) in solid form. The HMA is applied onto the antenna, by first heating the HMA, wherein the HMA melts. Thereafter, the HMA is applied by coating, extruding, printing, spraying or any other method which will deposit a layer of HMA onto the antenna. In one embodiment the HMA is applied onto the antenna before the IC attachment step (see below). In alternative embodiment the HMA is applied onto the antenna already in the antenna manufacturing process. The thickness of the HMA layer onto the antenna depends on the thickness of the IC, i.e. the RFID chip. At minimum the HMA should fill the gap between the chip and the antenna, and maximum it should not climb on top of the chip. On average the suggested thickness is about 5-50 micrometres. Example of suitable hot melt adhesives are PO (polyolefin-based hot melt adhesive) and EVA (Ethylene-Vinyl Acetate hot melt adhesive). However, those skilled in the art realize that other similar HMAs may be used.

The antenna, with the HMA applied onto it, is transported to a heating step where the antenna material becomes soft and partly melted and the HMA melts to become tacky and liquid. A preferred antenna metal alloy starts to melt from 138°C and is completely liquid at 183°C. A preferred temperature range for this antenna would be around 140-170°C. However, an optimal temperature must also be taken with care of the HMA melt temperature, which also may differ depending on the choice of thermoplastic material. The heating may be performed in many various ways, such as oven, IR heating, laser, heating plate etc. so that it reaches a desired temperature (melting of both the antenna and the HMA) at the position where the IC is intended to be placed.

The RFID chip, i.e. the IC, having bumps, connection pads or similar that are intended to be placed at a predetermined position onto the antenna.

The IC is then pressed onto the soft antenna such that the IC (bumps, pads or similar) presses through the melted HMA and into the soft antenna. An electrical connection is here established between the IC and the antenna. The melted HMA, in liquid form, will surround the joint between the IC and the antenna.

After the IC attaching step, the ambient air will cool down the RFID tag, such that the HMA and the solder material solidifies. The solidified HMA will give an extra mechanical strength to soldered joint between the IC and the antenna. No forced cooling is necessary.

Moreover, not all parts of the antenna needs to be covered with the HMA in solid phase. It is enough if the parts of the antenna that are in contact with the IC are applied with HMA.

Moreover, the heating process can be performed before, after or at the same time as the IC has been placed in its position onto the antenna.

In an alternative embodiment, the HMA is applied onto the bottom of the IC, i.e. the side of the IC that facing against the antenna. In this embodiment the heating process is performed before or after the IC has been placed in its position onto the antenna.

### 4. Fourth step - forming the collar piece

The final step for manufacturing the collar piece is to cut out a single collar piece from the collar web, wherein the collar piece 2 comprising the RFID tag 3, which is attached onto the collar piece 2.

The collar piece 2 is then formed such that it can be arranged inside the cigarette pack 1.

Some benefits with the present invention in comparison to conventional RFID tag manufacturing is that the production process is much more efficient, especially when it comes to bigger batches. Moreover, no extra adhesive material between the RFID tag and the collar piece is needed, which in turns gives a thinner collar piece.

In the foregoing, the invention has been described on the basis of some specific embodiments. However, a person skilled in the art realises that other embodiments and variants are possible within the scope of the following claims. For example the antenna may consist of different metal alloys with other melting points, the desired heating temperature is therefore desired upon this fact.

All specific values of temperatures, dimensions etc. may also differ depending on which embodiment of the invention that has been chosen. For example the dimensions (76mm width and 100m length) of the collar web material may differ from the mentioned. The skilled person realizes that in an RFID antenna production line, the process is applicable in larger dimensions: The web width could be 76mm to 350mm, roll length could be hundreds of meters or even thousands of meters. And when the antenna would have been formed, and the IC attached, we would slit the web into for example 76mm, and cut it to shorter length, for example 100m. Hence, the dimensions of the collar web is not essential for the invention.

## Claims

1. Method for manufacturing a collar piece (2) comprising an RFID tag (3), which collar piece is intended to be arranged as an inner frame in a cigarette pack (1), **characterized in that** the method comprising the steps of:
- providing a roll of collar material web made of paperboard;
- forming an antenna pattern of electrically conductive solid particles directly onto the surface of the collar web material; and
- heating the conductive material to a temperature exceeding a characteristic melting point of the material, such that the RFID antenna is formed.
- attaching an RFID IC onto the antenna, such that, an electrical connection between the IC and the antenna is established, such that the RFID tag (3) is formed;
- cutting out a single collar piece (2) from the collar web, wherein the collar piece (2) comprising the RFID tag (3); and
- forming the collar piece such that it can be arranged inside the cigarette pack.

2. Method according to claim 1, **characterized in that** the RFID IC is attached onto the antenna by applying an adhesive between the IC and the antenna pad area and pressing the IC onto the RFID antenna.

3. Method according to claim 1, **characterized in that** the RFID IC is attached onto the antenna by:
- applying a hot melt adhesive between the IC and the antenna;
- heating the antenna to a temperature above its melting point, wherein the heated parts of the antenna and the hot melt adhesive melts;
- placing the IC in a predetermined position which position is suitable for the IC to connect to the antenna,
- pressing the IC and antenna together, such that an electrical connection between the IC and the antenna is established, and
- cooling RFID tag, such that the hot melt adhesive and the antenna solidifies.

## Patentansprüche

1. Verfahren zur Herstellung eines Kragenstücks (2), das ein RFID-Tag (3) umfasst, wobei das Kragenstück dafür vorgesehen ist, als ein Innenrahmen in einer Zigarettenpackung (1) angeordnet zu werden,
**dadurch gekennzeichnet, dass** das Verfahren ferner folgende Schritte umfasst:
- Bereitstellen einer Rolle einer Kragenmaterialbahn aus Karton;
- Ausbilden eines Antennenmusters aus elektrisch leitenden Feststoffteilchen direkt auf der Oberfläche des Kragenbahnmaterials; und
- Erwärmen des leitenden Materials auf eine Temperatur, die einen charakteristischen Schmelzpunkt des Materials übersteigt, sodass die RFID-Antenne gebildet wird.
- Aufbringen eines RFID-IC auf die Antenne, sodass eine elektrische Verbindung zwischen dem IC und der Antenne hergestellt wird, sodass das RFID-Tag (3) gebildet wird;
- Ausschneiden eines einzelnen Kragenstücks (2) aus der Kragenbahn, wobei das Kragenstück (2) das RFID-Tag (3) umfasst; und
- Ausbilden des Kragenstücks derart, dass es im Inneren der Zigarettenpackung angeordnet werden kann.

2. Verfahren nach Anspruch 1, **dadurch gekennzeichnet, dass** der RFID-IC auf die Antenne aufgebracht wird, indem ein Klebstoff zwischen dem IC und dem Antennenanschlussbereich aufgetragen wird und der IC auf die RFID-Antenne aufgedrückt wird.

3. Verfahren nach Anspruch 1, **dadurch gekennzeichnet, dass** der RFID-IC auf die Antenne aufgebracht wird durch:
- Auftragen eines Heißschmelzklebstoffs zwischen dem IC und der Antenne;
- Erwärmen der Antenne auf eine Temperatur oberhalb ihres Schmelzpunkts, wobei die erwärmten Teile der Antenne und der Heißschmelzklebstoff schmelzen;
- Platzieren des IC in einer vorbestimmten Position, wobei die Position für eine Verbindung des IC mit der Antenne geeignet ist,
- Zusammendrücken des IC und der Antenne, sodass eine elektrische Verbindung zwischen dem IC und der Antenne hergestellt wird, und
- Kühlen des RFID-Tags, sodass der Heißschmelzklebstoff und die Antenne erstarren.

## Revendications

1. Procédé de fabrication d'une pièce de col (2) comprenant une étiquette RFID (3), laquelle pièce de col est destinée à être disposée en tant que support intérieur dans un paquet de cigarettes (1),
**caractérisé en ce que** le procédé comprenant les étapes de :
- fourniture d'un rouleau de bande de matériau de col réalisé en carton ;
- formation d'un diagramme d'antenne de particules solides électriquement conductrices directement sur la surface de la bande de matériau de col ; et
- chauffage du matériau conducteur à une température dépassant un point de fusion caractéristique du matériau, de sorte que l'antenne RFID est formée.
- fixation d'un circuit intégré RFID sur l'antenne, de sorte qu'une connexion électrique entre le circuit intégré et l'antenne est établie, de sorte que l'étiquette RFID (3) est formée ;
- découpe d'une pièce de col unique (2) à partir de la bande de col, dans lequel la pièce de col (2) comprend l'étiquette RFID (3) ; et
- formation de la pièce de col de telle sorte qu'elle peut être disposée à l'intérieur du paquet de cigarettes.

2. Procédé selon la revendication 1, **caractérisé en ce que** le circuit intégré RFID est fixé sur l'antenne par application d'un adhésif entre le circuit intégré et la zone tampon de l'antenne et par pression du circuit intégré sur l'antenne RFID.

3. Procédé selon la revendication 1, **caractérisé en ce que** le circuit intégré RFID est fixé sur l'antenne par :
- l'application d'un adhésif thermofusible entre le circuit intégré et l'antenne ;
- le chauffage de l'antenne à une température supérieure à son point de fusion, dans lequel les parties chauffées de l'antenne et de l'adhésif thermofusible fondent ;
- le placement du circuit intégré dans une position prédéterminée, laquelle position est appropriée pour que le circuit intégré se connecte à l'antenne,
- la pression ensemble du circuit intégré et de l'antenne, de sorte qu'une connexion électrique entre le circuit intégré et l'antenne est établie, et
- le refroidissement de l'étiquette RFID, de sorte que l'adhésif thermofusible et l'antenne se solidifient.
